# FASCICULE DE BREVET EUROPEEN

(11) **EP 4 251 505 B1**
(45) Date de publication et mention de la délivrance du brevet: **22.07.2026**
(21) Numéro de dépôt: 21816066.1
(22) Date de dépôt: 26.11.2021
(51) Int. Cl.: B62M 6/55, B62M 6/45, B62M 11/06, B62M 25/08, B60L 50/20, B60L 15/20, F16H 3/083, F16H 3/091, F16H 57/027

(54) **ENSEMBLE DE TRANSMISSION POUR ENGIN DE MOBILITÉ, UNITÉ DE PILOTAGE POUR ENGIN DE MOBILITÉ, BOÎTIER ET PROCÉDÉ DE PILOTAGE POUR ENGIN DE MOBILITÉ**
ANTRIEBSSTRANG, STEUEREINHEIT UND GEHÄUSE FÜR EIN MOBILITÄTSFAHRZEUG UND VERFAHREN ZUR STEUERUNG EINES MOBILITÄTSFAHRZEUGS
DRIVETRAIN, CONTROL UNIT AND CASING FOR A MOBILITY VEHICLE AND METHOD FOR CONTROLLING A MOBILITY VEHICLE

(30) Priorité: 27.11.2020 FR 2012232; 27.11.2020 FR 2012290; 27.11.2020 FR 2012295; 27.11.2020 FR 2012319; 27.11.2020 FR 2012338; 15.12.2020 FR 2013310; 15.12.2020 FR 2105137
(43) Date de publication de la demande: 04.10.2023
(73) Titulaire: VALEO EMBRAYAGES, 80009 Amiens (FR)
(72) Inventeur: CAILLAUD, Jonathan, 38070 SAINT QUENTIN FALLAVIER (FR); SIEGWART, Jean Baptiste, 38070 SAINT QUENTIN FALLAVIER (FR); LAURENS, Christophe, 38070 SAINT QUENTIN FALLAVIER (FR); DORET, Quentin, 38070 SAINT QUENTIN FALLAVIER (FR)
(74) Mandataire: Valeo Powertrain Systems
(86) Numéro de dépôt international: PCT/EP2021/083175
(87) Numéro de publication internationale: WO 2022/112504

(56) Documents cités:
- EP-A1- 2 783 964
- WO-A1-2020/174025
- CN-A- 107 089 292
- DE-A1- 102010 051 727
- DE-A1- 102016 225 165
- DE-A1- 102019 111 028
- DE-B3- 102016 014 066
- US-A1- 2020 198 729

## Description

Le domaine de la présente invention est celui de la mobilité dite douce, et plus particulièrement celui des engins de mobilités combinant propulsion électrique et force musculaire, par exemple les vélos à assistance électrique.

L'invention concerne notamment les vélos de ville à assistance électriques aussi bien que les vélos de montagne ou de randonnée ainsi que les vélos cargo.

Les modes de transports écologiques comme le vélo ont depuis longtemps la faveur de certains pays et continuent à se développer aussi bien pour des activités de loisir ou de sport que pour les besoins de la vie économique et du transport des biens et des personnes. Il existe un besoin pour améliorer les performances et la fiabilité de ces types d'engins de mobilité, faciliter leur fabrication et leur entretien, qu'ils soient à assistance électrique ou non.

Lors du déplacement en vélo, la force motrice est fournie par le cycliste, elle est transmise aux roues par l'intermédiaire d'un système de manivelle tournant autour d'un axe de pédalier qui entraîne la roue arrière généralement par une chaîne.

Des boites de vitesses pour cycles sont connues de l'art antérieur. En particulier la publication FR2975367 A1 divulgue un dispositif de changement de vitesses pour vélos comportant une boîte de vitesses à engrenages et une navette coulissante pour effectuer la sélection du rapport. Le dispositif et les engrenages de la boîte de vitesses sont agencés dans un boîtier commun. Des joints d'étanchéité sont prévus au niveau de la jonction des différentes pièces du boitier. Il existe un besoin pour favoriser la circulation de l'air au niveau des engrenages d'une boite de vitesse pour engin de mobilité, en particulier des engins à pédalier. Il existe également un besoin pour éviter les fuites d'huile de lubrification des engrenages des boites de vitesse pour cycles, et ce dans toutes les positions d'usage ou de repos.

Alors que le domaine des véhicules légers à pédalier pour le transport de biens ou des personnes se diversifie il existe un besoin pour des boites de vitesse automatiques et électriques fiables et faciles à fabriquer.

La demande DE102009029655 A1 décrit une méthode de régulation de l'entraînement électrique auxiliaire d'un vélo. Une unité de commande est prévue pour commander l'entraînement électrique auxiliaire de telle manière qu'une force d'entraînement uniforme est continuellement générée à partir de la composante de puissance appliquée par le conducteur et de la composante de puissance appliquée par l'entraînement auxiliaire électrique.

La demande EP2480446 A1 divulgue, pour une bicyclette présentant un entrainement électrique auxiliaire, un procédé visant à récupérer et accumuler de l'énergie lorsque le sens de rotation du pédalier est dirigé vers l'arrière.

La demande DE 10 2019 111028 A1 divulgue un ensemble de transmission pour engin de mobilité selon le préambule de la revendication 1.

Il existe un besoin pour favoriser et améliorer le pilotage des vélos à assistance électrique.

Il existe également un besoin pour favoriser la récupération d'énergie lors de l'utilisation de vélos à assistance électrique, en particulier en mode freinage.

Un problème rencontré des engins de l'art antérieur, en particulier des vélos à assistance électrique connus, est le passage de rapport sous charge. Cette situation arrive notamment lorsque le cycliste aborde une côte et ressent le besoin de rétrograder parce que l'effort devient trop intense ou la fréquence de pédalage trop basse. La boite de vitesse peut se retrouver dans l'impossibilité de changer de rapport en raison du couple important la traversant.

Il existe un besoin pour favoriser le passage de vitesse des boîtes de vitesse pour engins de mobilité à pédalier.

Pour répondre au moins en partie à ces besoins, l'invention a pour objet un ensemble de transmission pour engin de mobilité selon la revendication 1. Des modes de réalisation préférés de l'invention sont définis dans les revendications dépendantes.

L'engin de mobilité est un engin de mobilité à assistance électrique. Le moteur électrique fournit notamment une partie de la puissance de propulsion lorsque la vitesse instantanée de l'engin de mobilité est inférieure à une valeur seuil.

Dans le cadre de la présente demande on utilisera indifféremment les termes « biclyclette », « vélo », l'expression « engin de mobilité » et « engin ».

Selon un mode de réalisation, l'engin comporte au moins une roue, il peut comporter deux, trois ou quatre roues, voire plus.

Dans le cadre de la présente invention les termes pilote, conducteur, cycliste sont équivalents. L'engin peut être utilisé avec ou sans assistance électrique.

Le pignon de sortie du dispositif de changement de vitesse relié au moteur électrique correspond à un des rapports du dispositif de changement de vitesse. Selon différents modes de réalisation de l'invention le moteur électrique est relié à l'un ou l'autre des pignons de sortie sans que ce choix soit limitatif.

De façon avantageuse, l'ensemble de transmission selon l'invention présente seule ou en combinaison l'une ou l'autre des caractéristiques ci-dessous :
- Il comporte un réducteur, le moteur électrique étant relié au pignon de sortie du dispositif de changement de vitesse via le réducteur notamment via une pluralité de pignons du réducteur. La pluralité de pignons peut comporter cinq pignons, notamment un premier pignon co-axial au moteur électrique, un deuxième pignon, pignon d'entrée du réducteur, engrenant avec le premier pignon,
   un troisième pignon, pignon de sortie du réducteur, solidaire en rotation du deuxième pignon, le troisième pignon engrenant avec un quatrième pignon, un cinquième pignon agencé pour engrener avec le pignon de sortie du dispositif de changement de vitesse, le cinquième pignon étant solidaire en rotation du quatrième pignon.
- Il comporte au moins une roue libre. Il peut comporter une roue libre liée au moteur électrique et/ou une roue libre liée au pédalier.

Dans un exemple particulier il comporte une roue libre liée au moteur électrique, l'axe de la roue libre étant notamment distinct de l'axe du moteur électrique. La roue libre liée au moteur électrique est par exemple située dans le quatrième pignon. Ce mode de réalisation est particulièrement avantageux lorsque la vitesse des premier pignon et deuxième pignons de multiplication primaire est supérieure ou égale à une valeur seuil correspondant à vitesse seuil de l'engin de mobilité au-delà de laquelle le moteur électrique ne fournit pas de puissance. Grâce à la roue libre, les premier pignon et deuxième pignons de multiplication primaire ne sont plus reliés au moteur électrique et l'utilisateur n'a pas à fournir de puissance supplémentaire pour combattre l'inertie du réducteur et du moteur électrique.
- l'ensemble de transmission comporte une unité de pilotage agencée pour piloter au moins un du moteur électrique et du dispositif de changement de vitesse. Selon différents exemples de mise en œuvre, l'unité de pilotage est agencée pour piloter en outre au moins un d'un système de freinage, un système d'éclairage, un système de localisation et/ou de navigation, un système interface homme-machine, cette liste n'étant pas limitative.
- l'ensemble de transmission est logé dans un boitier, notamment situé au niveau du pédalier
- le dispositif de changement de vitesse présente entre 2 et 12 rapports, voire entre 5 et 9 rapports.
- lorsque le rapport supérieur est enclenché, la vitesse de sortie du dispositif de changement de vitesse est entre 3 et 6 fois supérieure, en particulier 4,5 fois supérieure à la vitesse d'entrée du dispositif de changement de vitesse.
- le saut de rapport de réduction entre deux rapports consécutifs du dispositif de changement de vitesse est compris entre 10% et 50%, en particulier entre 15% et 40% , notamment entre 20% et 40%.
- le dispositif de changement de vitesse présente le rapport neutre qui, lorsqu'il est enclenché ne permet pas à un mouvement du pédalier de propulser l'engin de mobilité.
-

Chacun des rapports présente un ratio particulier, entre la vitesse de sortie et la vitesse d'entrée du dispositif de changement de vitesse.

L'actionneur de changement de vitesse comporte des moyens électriques d'engagement d'un rapport, notamment un motoréducteur. L'unité de pilotage de l'ensemble de transmission est par exemple agencée pour piloter le motoréducteur de l'actionneur de changement de vitesse.

L'actionneur de changement de vitesse comporte également des moyens mécaniques d'engagement d'un rapport formés par une navette mobile en translation dans l'arbre de sélection 200 tel que décrite dans la demande FR2975367A1.

Selon un aspect non-revendiqué, la présente demande a pour objet un boîtier apte à loger un dispositif de changement de vitesse pour un engin de mobilité, ledit boitier comportant un premier logement pour loger au moins des engrenages du dispositif changement de vitesse, ledit boitier comportant un évent de mise à l'air libre du premier logement.

Selon cet aspect, cela préserve une mise à l'air des engrenages du dispositif changement de vitesse dans toutes les positions d'usage ou de repos de l'engin de mobilité. Dans toutes les orientations du boitier les fuite d'huile sont évitées.

Les orientations les plus courantes du boitier sont:
- orientation horizontale correspondant à l'utilisation sur une route sans dénivelé
- deux orientations verticales possibles lorsque l'engin de mobilité est stocké pendu par la roue ou par la roue arrière,

- à l'envers, par exemple lorsque le cycliste transporte son vélo sur un toit de voiture ou met son vélo à l'envers pourr faire une réparation ou un entretien
- couchée selon l'inclinaison du sol, lorsque par exemple l'engin de mobilité est posé à terre contre une pédale

De façon avantageuse, le boîtier présente seule ou en combinaison l'une ou l'autre des caractéristiques ci-dessous :
- l'évent est situé dans une cavité du boitier distincte du premier logement,
- pour toute orientation du boîtier le volume intérieur au premier logement correspondant au volume d'huile de lubrification des engrenages du dispositif de changement de vitesse est situé en dessous de l'évent,
- ledit boitier comporte au moins un passage entre la cavité et le premier logement qui permet en particulier à l'air de circuler. Le passage est distinct de l'évent. De façon avantageuse, le boîtier comporte un passage supérieur et un passage inférieur.
- il comporte au moins un deuxième logement, pour loger notamment un moteur électrique, un réducteur, un actionneur de changement de vitesse et/ou une unité de pilotage de l'engin de mobilité.
- la cavité est distincte du ou des deuxièmes logements. La cavité est avantageusement centrale. Elle est située dans le boitier entre le premier logement et le ou les deuxièmes logements.

La cavité est placée de telle sorte que dans aucune des orientations du boîtier le niveau naturel de l'huile le premier logement n'atteigne le passage vers la cavité. Ainsi est évité le remplissage d'huile de la cavité. Le ou les passages qui permettent à l'air de circuler entre le premier logement et la cavité et peuvent parfois laisser passer de l'huile dans certaines orientations. Néanmoins, si de l'huile reste prisonnière temporairement dans la cavité elle retournera vers le premier logement dès que le passage sera en position permettant une vidange de la cavité par gravité.

L'évent est situé dans une zone de la cavité éloignée de toute possibilité de réserve, même faible, d'huile. Une aspiration de l'huile est ainsi empêchée.

Selon un autre de ses aspects non-revendiqués, la présente demande porte sur un procédé antivol pour engin de mobilité, ledit engin comportant un moteur électrique agencé pour assurer tout ou partie de la propulsion dudit engin et un dispositif de changement de vitesse présentant une pluralité de rapports entre un premier rapport dit rapport n° 1 et un rapport supérieur, chacun des rapports présentant un ratio, ledit dispositif de changement de vitesse présentant en outre un rapport neutre qui, lorsqu'il est enclenché ne permet pas à un mouvement du pédalier de propulser l'engin de mobilité et comportant un actionneur de changement de vitesse agencé pour engager un rapport sélectionné parmi le rapport neutre et les différents rapports entre le rapport n° 1 et le rapport supérieur.

Selon encore un autre de ses aspects non-revendiqués, la présente demande porte aussi sur une unité de pilotage pour engin de mobilité,
ledit engin comportant un moteur électrique agencé pour assurer tout ou partie de la propulsion dudit engin et un dispositif de changement de vitesse présentant une pluralité de rapports entre un premier rapport dit rapport n° 1 et un rapport supérieur,
l'unité de pilotage étant agencée pour piloter au moins un du moteur électrique et du dispositif de changement de vitesse.

De façon préférentielle l'unité de pilotage est agencée pour piloter le moteur électrique et le dispositif de changement de vitesse.

L'unité de pilotage est agencée pour recevoir une consigne d'un utilisateur de l'engin de mobilité. La consigne est notamment une consigne de marche arrière. Elle peut être progressive en vitesse. Dans un autre exemple, la consigne est une consigne de freinage régénératif. Selon encore d'autres exemples de mise en œuvre la consigne est une consigne d'activation du mode d'assistance 'piéton' ou encore de verrouillage, respectivement déverrouillage pour activer, respectivement désactiver la fonction antivol.

Dans des modes de réalisation particuliers l'unité de pilotage est agencée pour piloter au moins un d'un :
- système de freinage
- système d'éclairage
- système de localisation
- système interface homme-machine, ledit système interface homme-machine étant agencé pour informer l'utilisateur et/ou considérer les demandes dudit utilisateur. Le système interface homme-machine est en particulier agencé pour transmettre à l'unité de pilotage un signal tel que décrit précédemment correspondant à une instruction de changement de rapport. Selon les modes de réalisation le système interface homme-machine est apte à présenter à l'utilisateur des informations reçues de l'unité de pilotage.

Avantageusement, l'unité de pilotage peut comporter ou être reliée à au moins un dispositif de détermination de la position du pédalier. Le dispositif de détermination de la position du pédalier est par exemple un système de mesure de ladite position à l'aide d'un capteur.

Dans une variante, l'unité de pilotage comporte un tel dispositif de détermination de la position du pédalier et estime la position du pédalier par calcul.

L'unité de pilotage peut comporter ou être reliée à au moins un capteur sélectionné parmi un capteur de vitesse instantanée de l'engin de mobilité, un accéléromètre, un capteur de pente, un capteur de cadence de pédalage, un capteur de couple du cycliste, un capteur de mesure de l'assiette de l'engin de mobilité.

Dans la présente demande les expressions « cadence de pédalage », « fréquence de pédalage » et « vitesse de pédalage » sont employées de façon équivalente.

Dans le cadre de la présente demande le terme pédalier se rapportant par exemple à un vélo à assistance électrique doit être compris dans un sens large utilisé pour décrire tout moyen d'entrée du couple fourni par un utilisateur de l'engin de mobilité.

L'unité de pilotage est notamment agencée pour mettre en oeuvre un procédé tel que décrit dans la présente demande.

Selon encore un autre de ses aspects non-revendiqués, la présente demande porte sur un système antivol pour engin de mobilité comportant
- un dispositif de changement de vitesse présentant
   a. une pluralité de k rapports entre un premier rapport dit rapport n° 1 et un rapport supérieur, chacun des rapports présentant un ratio de réduction particulier, entre un arbre d'entrée, agencé pour être relié à un pédalier de l'engin de mobilité, et un arbre de sortie du dispositif de changement de vitesse lorsque le rapport correspondant est enclenché,
   b. un rapport neutre qui, lorsqu'il est enclenché ne permet pas à un mouvement du pédalier de propulser l'engin de mobilité ,
- une unité de pilotage agencée pour piloter le dispositif de changement de vitesse.

Le système antivol peut comporter ou être relié à une commande, par exemple un bouton ou un ensemble de touches de l'interface utilisateur.

Selon un autre de ces aspects, l'invention porte aussi sur un engin de mobilité comportant un ensemble de transmission tel que décrit précédemment.

L'engin de mobilité comporte par exemple au moins un capteur sélectionné parmi :
- un capteur de détermination de la position du pédalier,
- un capteur de vitesse de rotation du pédalier,
- un capteur de vitesse de l'engin de mobilité,
- un accéléromètre pour mesurer une accélération de l'engin de mobilité,
- un capteur de pente pour mesurer une pente de la zone de roulage,
- un capteur de couple pour mesurer un couple généré par l'utilisateur.

L'unité de pilotage est par exemple agencée pour recevoir des consignes de l'utilisateur et /ou des données en provenance d'un capteur et/ou du système de localisation/navigation. Une consigne de l'utilisateur est notamment une consigne de marche arrière. Elle peut être progressive en vitesse. Dans un autre exemple, la consigne est une consigne de freinage régénératif.

Selon un autre de ses aspects non-revendiqués, la présente demande a pour objet un engin de mobilité comportant un dispositif changement de vitesse logé dans un boîtier tel que décrit précédemment.

L'engin peut comporter une batterie ou tout autre dispositif rechargeable pour alimenter le moteur électrique et/ou l'actionneur du dispositif de changement de vitesse.

L'engin comporte notamment une batterie, ou tout autre moyen rechargeable connu de homme du métier pour fournir l'énergie nécessaire pour alimenter le moteur électrique, un système d'éclairage, un pédalier, un système de localisation et/ou navigation ainsi qu'un système interface homme-machine.

Selon un autre aspect non-revendiqué, la présente demande a pour objet un procédé de pilotage pour engin de mobilité, ledit engin comportant un moteur électrique agencé pour assurer tout ou partie de la propulsion dudit engin et un dispositif de changement de vitesse présentant une pluralité de rapports entre un premier rapport dit rapport n° 1 et un rapport supérieur, chacun des rapports présentant un ratio, ledit dispositif de changement de vitesse comportant un actionneur de changement de vitesse agencé pour engager un rapport sélectionné présentant un ratio, ledit procédé permettant notamment de piloter au moins un du moteur électrique et du dispositif de changement de vitesse.

L'engin de mobilité peut être un engin de mobilité à assistance électrique pour lequel le moteur électrique fournit notamment une partie de la puissance de propulsion lorsque la vitesse instantanée de l'engin de mobilité est inférieure à une valeur seuil.

Selon cet aspect, le procédé de pilotage permet ainsi le contrôle du dispositif de changement de vitesse d'un engin de mobilité, en particulier d'un vélo électrique. Le changement de rapport du dispositif de changement de vitesse s'effectue sans aucun à coup et ne nécessite pas une activation de la part de l'utilisateur.

Plus précisément, le pilotage du moteur électrique d'assistance facilite les passages de rapport de ce même dispositif de changement de vitesse.

Ce procédé de pilotage permet d'intégrer un moteur d'assistance électrique et un dispositif de changement de vitesse automatique et adaptatif dans le pédalier. Ainsi, c'est le vélo qui s'adapte au cycliste et non plus l'inverse. Le passage de vitesse est automatique et le procédé ajuste instantanément l'intensité d'assistance électrique dont le cycliste a besoin, en roulage aussi bien qu'au premier coup de pédale. En mode automatique, l'unité de pilotage détermine le niveau d'assistance et le rapport optimum. L'utilisateur garde la possibilité à tout instant de passeren mode manuel et notamment choisir un rapport particulier. De manière avantageuse le moteur électrique est notamment en aval du dispositif de changement de vitesse dans la chaîne de transmission du couple, il est par exemple relié à l'arbre de sortie du dispositif de changement de vitesse.

Sauf précision contraire, le moteur électrique est agencé pour tourner dans un sens correspondant à un déplacement de l'engin de mobilité en marche avant. Lors de certaines mises en œuvre , le moteur électrique tourne dans un sens opposé correspondant à un déplacement de l'engin de mobilité en marche arrière.

Le moteur électrique étant situé en aval du dispositif de changement de vitesse permet de générer un couple moteur sans passer par ce même dispositif de changement de vitesse. L'actionneur de changement de vitesse peut alors agir sans ajout d'effort de blocage de la part du moteur électrique.

Le pilotage d'un couple instantané et important du moteur électrique permet une accélération de la chaîne de transmission en aval du dispositif de changement de vitesse ce qui engendre un relâchement de la tension entre l'entrée et la sortie ce même dispositif. En conséquence l'actionneur de changement de vitesse subit un effort de blocage diminué.

De façon avantageuse, le procédé de pilotage présente, seule ou en combinaison, au moins l'une ou l'autre des une étape ci-dessous concernant le pilotage du dispositif de changement de vitesse ou le pilotage du moteur électrique:
- une étape de renforcement du couple du moteur électrique notamment en réponse à un signal correspondant à une demande de changement de rapport. Le signal correspond par exemple à une instruction de changement de rapport de la part d'un conducteur de l'engin de mobilité. Dans une variante le signal résulte d'une étape de calcul du rapport optimal comme décrit plus loin. Ainsi cette étape de renforcement du couple du moteur électrique (aussi appelée étape « boost » venant du terme anglais) peut être déclenchée automatiquement selon un procédé.

Ce déclenchement automatique se produit notamment lorsque l'unité de pilotage détermine que le changement de rapport à effectuer nécessite un apport d'assistance supplémentaire, un pique de puissance moteur pendant un temps paramétré afin de fournir une assistance supplémentaire au cycliste sans que celui-ci ne ressente d'à-coup.

Dans le cas d'un engin à assistance électrique, l'application d'un couple moteur instantané et important au moment où le cycliste génère le moins d'effort permet un relâchement optimal des contraintes dans le dispositif de changement de vitesse au moment où l'actionneur de changement de vitesse procède à un changement. En outre, un capteur ou estimateur de position (via un profil de couple ou de vitesse cycliste mesuré) permet de définir un rapport optimal instantané, en fonction du temps.

Dans une variante de cette étape, sa mise en œuvre intervient suite à une consigne de l'utilisateur, par exemple via une commande au guidon, qui souhaite bénéficier d'un renforcement momentané du couple du moteur électrique par exemple pour faciliter un dépassement ou le franchissement d'une côte. Une telle consigne déclenche en particulier une étape de renforcement de la puissance pour une durée préprogrammée, par exemple 10s. Dans une variante le maintien continu d'une commande, par exemple bouton ou cliquet, au niveau de l'interface utilisateur détermine la durée effective de l'étape en restant inférieure à une durée maximum.
- étape de réduction du couple du moteur électrique . Préalablement à l'étape décrite ci-dessus, il peut être avantageux de réduire le couple moteur avant de l'augmenter de façon plus importante.
   - étape d'enclenchement d'un rapport sélectionné du dispositif de changement de vitesse, en particulier précédé d'une étape de sélection dudit rapport. Lors de cette étape, l'unité de pilotage commande l'actionneur de changement de vitesse à partir d'une consigne de l'utilisateur pour indiquer le rapport choisi. Dans une variante préférentielle la consigne est le résultat d'un calcul effectué par l'unité de pilotage.
- étape de calcul du rapport optimal du dispositif de changement de vitesse
- étape d'enclenchement d'un rapport neutre pour lequel la sortie du dispositif de changement de vitesse n'est pas reliée au pédalier. Un tel rapport neutre peut être enclenché par exemple suite à une consigne de l'utilisateur. Ce dernier peut par exemple décider d'activer un mode d'assistance 'piéton' lorsque qu'il décide de pousser le vélo. Cette fonction est notamment utile en cas de transport de charge.
- étape de freinage régénératif. Le dispositif de changement de vitesse est notamment en rapport neutre. Le mouvement de la roue fait tourner le moteur électrique qui fonctionne comme générateur et charge la batterie lorsque celle-ci est en partie déchargée. L'étape de freinage régénératif est dans une variante suivie d'une étape de freinage mécanique dans laquelle l'unité de pilotage commande le système de freinage.
- étape de commande du moteur électrique en sens inverse, c'est-à-dire dans un sens correspondant à un déplacement de l'engin de mobilité en marche arrière. Le dispositif de changement de vitesse est notamment en rapport neutre. Dans une mise en œuvre particulière, l'utilisateur peut se déplacer à côté de l'engin qui recule.
- étape de blocage d'au moins une roue de l'engin, indifféremment roue avant ou roue arrière. Cette étape permet une solution antivol de l'engin de mobilité particulièrement simple à mettre en œuvre.
- étape de gestion de batterie faible. Par exemple, lorsqu'on arrive en fin de capacité de la batterie, l'unité de pilotage supportant le procédé bascule sur le second rapport du dispositif de changement de vitesse.

Dans un mode de réalisation avantageux, le procédé adaptatif. Selon ce mode de réalisation particulier, le procédé collecte les besoins de l'utilisateur, non seulement sous forme de consigne de l'utilisateur mais également par une analyse du style de conduite et des contraintes liées au parcours.

Le changement des rapports du dispositif de changement de vitesse s'effectue sans aucun à coup. L'utilisateur peut notamment choisir un mode totalement automatique de pilotage du système de changement de vitesse, ne nécessitant aucune activation ultérieure de sa part.

Selon encore un autre de ses aspects non-revendiqués, la présente demande a pour objet un procédé de freinage régénératif pour engin de mobilité mis en œuvre à l'aide d'un ensemble de transmission, tel que décrit précédemment.

Le procédé de freinage régénératif comporte notamment une étape de freinage moteur qui peut être précédée d'une étape d'enclenchement du rapport neutre. Par freinage moteur on entend que le moteur n'entraine plus les roues dans cette étape. Ce sont les roues qui entrainent le moteur et permettent de recharger la batterie ou le dispositif rechargeable d'alimentation du moteur électrique.

Avantageusement l'étape de freinage moteur est suivie d'une étape de freinage mécanique durant laquelle un système mécanique de freins est activé.

Lors de l'étape de freinage moteurla vitesse du moteur est de sens opposé au couple.

Selon encore un autre de ses aspects non-revendiqués, la présente demande a pour objet un procédé de marche arrière pour engin de mobilité mis en œuvre à l'aide d'un ensemble de transmission, tel que décrit précédemment.

Le procédé de marche arrière comporte notamment une étape de commande du moteur électrique en sens inverse, c'est-à-dire dans un sens correspondant à un déplacement de l'engin de mobilité en marche arrière, en particulier précédée d'une étape d'enclenchement du rapport neutre.

Selon encore un autre de ses aspects non-revendiqués, la présente demande porte sur un procédé antivol pour engin de mobilité, ledit engin comportant un moteur électrique agencé pour assurer tout ou partie de la propulsion dudit engin et un dispositif de changement de vitesse présentant une pluralité de rapports entre un premier rapport dit rapport n° 1 et un rapport supérieur, chacun des rapports présentant un ratio, ledit dispositif de changement de vitesse présentant en outre un rapport neutre qui, lorsqu'il est enclenché ne permet pas à un mouvement du pédalier de propulser l'engin de mobilité et comportant un actionneur de changement de vitesse agencé pour engager un rapport sélectionné parmi le rapport neutre et les différents rapports entre le rapport n° 1 et le rapport supérieur.

### Exemples de situations particulières

Dans les exemples décrits le moteur électrique est un moteur électrique 48V sans balai. La présente demande n'est pas limitée à ce choix de moteur. Avec un couple de 133 Nm (Newton.mètre), le moteur utilisé dans les exemples suivants peut multiplier par exemple par huit, voire par neuf l'effort du cycliste.

### Exemple 1 : Démarrage en côte - Mode de réalisation capteur de pente

Dans une variante, l'unité de pilotage comporte un accéléromètre ou est agencée pour recevoir un signal d'un accéléromètre ou d'un capteur de pente. Le capteur de pente est par exemple intégré dans le boitier du moteur électrique. L'unité de pilotage reçoit ainsi l'information en temps réel de la pente sur laquelle l'engin de mobilité est situé et ou se déplace.

En pente ascendante, le cycliste devra fournir un fort couple pour mouvoir le vélo.

Lors d'un démarrage, le capteur de pente indique à l'unité de pilotage l'information de la pente sur laquelle le vélo est situé.

En connaissant le couple maximum que peut supporter le dispositif de changement de vitesse lors d'un changement de rapport, l'unité de pilotage commande l'actionneur du dispositif de changement de vitesse pour qu'il positionne le dispositif de changement de vitesse sur un rapport dit rapport optimal correspondant à une optimisation de la paire couple utilisateur - fréquence de pédalage à fournir par le cycliste avant même qu'il ait commencé à pédaler.

### Exemple 2 : Détection et anticipation de pente par un système de localisation et/ou navigation lors d'un roulage

Dans cet exemple, l'unité de pilotage comporte ou est reliée à un capteur de positionnement satellite et, de façon optionnelle à un capteur prévu pour caractériser le pédalage du cycliste, par exemple capteur de fréquence de pédalage.

Le capteur de localisation satellite est par exemple situé dans le boitier logeant également l'ensemble de transmission. Alternativement le capteur de positionnement satellite est situé sur le cadre de l'engin de mobilité.

L'unité de pilotage, à partir de l'information reçue du capteur de localisation, ainsi que l'anticipation du trajet du cycliste et les variations d'altitude sur les prochains mètres à venir calcule si le couple de pédalage anticipé est supérieur à celui que peut supporter dispositif de changement de vitesse lors d'un changement de rapport.

Le procédé détermine notamment le rapport du dispositif de changement de vitesse, c'est-à-dire le rapport optimal correspondant à la paire optimale couple-fréquence de pédalage que devra fournir le cycliste.

### Exemple 3 : Transport de charge sur sortie de parking (pente 14%).

Dans cet exemple, l'engin de mobilité est un vélo cargo avec une charge de 150 kg.

Le moteur électrique permet d'offrir sur une période limitée **un** surcroit de puissance pour faciliter les manœuvres de l'engin de mobilité dans des situations extrêmes. Les pentes de parking constituent à cause de leur pente importante des environnements urbains particulièrement difficiles. Cela facilite l'utilisation du vélo cargo, aussi bien en marche avant qu'en marche arrière. En montée, le procédé fournit de façon automatique une puissance supplémentaire permettant ainsi au cycliste de grimper sans effort une côte à 14%. En descente, le procédé active en particulier la fonction freinage régénératif afin de recharger la batterie.

### Brève description des figures

D'autres caractéristiques, détails et avantages de l'invention ressortiront plus clairement à la lecture de la description donnée ci-après à titre indicatif en relation avec des dessins dans lesquels :
La [Figure 1] est une vue d'un engin de mobilité selon un des aspects de l'invention,
la [Figure 2] illustre l'ensemble de transmission de l'engin de mobilité de la Figure 1,
la [Figure 3] illustre en coupe le chemin de couple pour un mode de réalisation particulierde l'invention,
les [Figure 3a] et [Figure 3b] illustrent des détails de variantes du mode de réalisation de la Figure 3,
la [Figure 4] illustre un boitier logeant un ensemble de transmission selon l'invention,
les [Figure 5a] à [Figure 5d]] illustrent schématiquement le boitier de la figure 4 dans différentes orientations,
la [Figure 6] est une vue schématique d'une mise en œuvre d'un procédé de pilotage,
les [Figure 7a] et [Figure 7b] illustrent une mise en œuvre particulière, et
les [Figure 8a] et [Figure 8b] illustrent une autre mise en œuvre,
la [Figure 9] illustre sous forme de schémas bloc différentes étapes d'un procédé antivol,
la [Figure 10 présente une courbe montrant la relation entre le seuil d'effort à fournir par le cycliste et le niveau d'assistance disponible de façon instantanée, et
la [Figure 11] illustre graphiquement plusieurs exemples de mise en œuvre.

### Description détaillée de l'invention

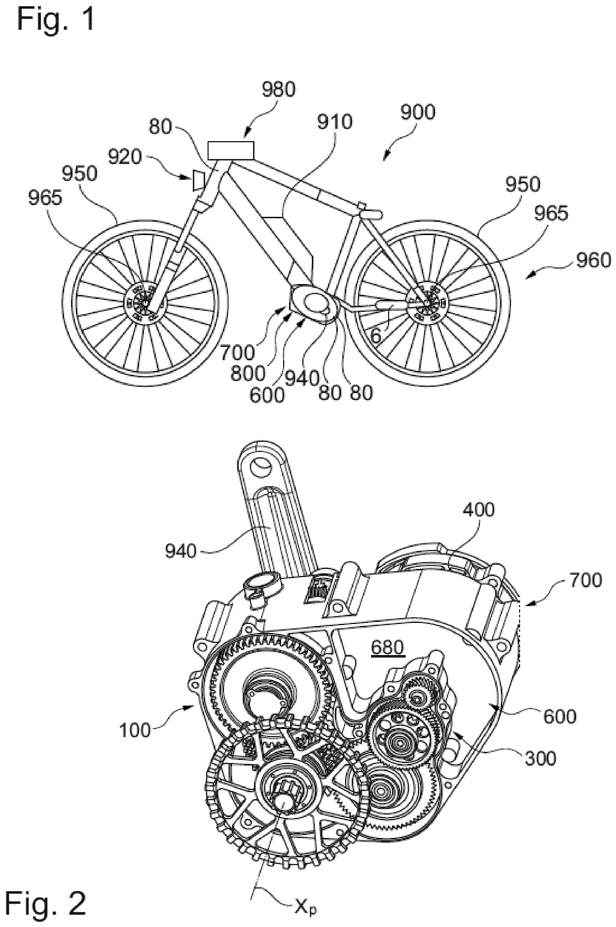

La Figure 1 illustre un engin de mobilité 900 selon un des aspects de l'invention. L'engin 900 est ici un vélo à assistance électrique comportant un moteur électrique 400 d'axe de rotation Xₘ. Ledit moteur électrique est agencé pour assurer une partie de la propulsion dudit engin.

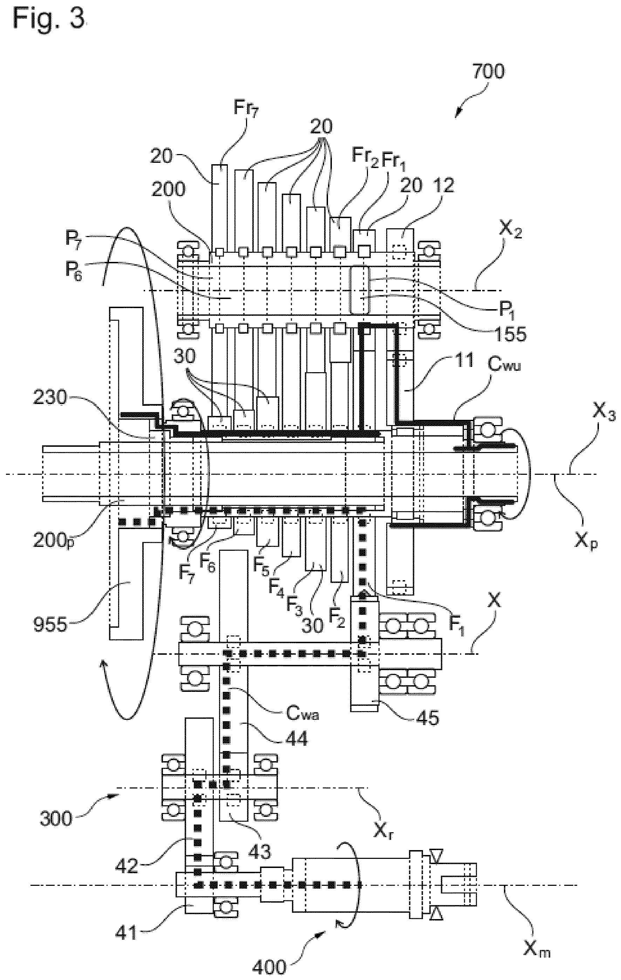

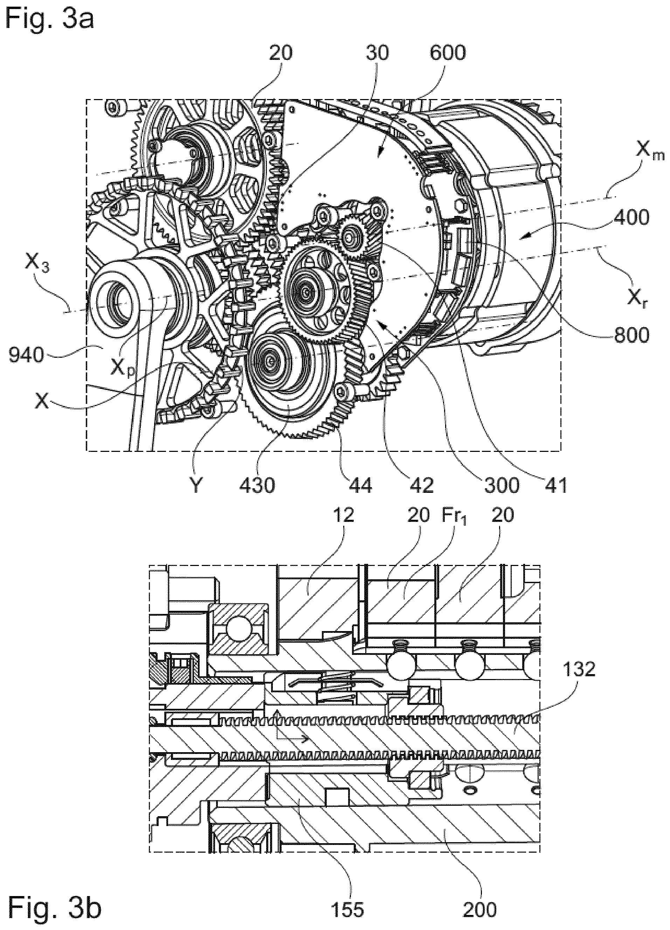

Lors du déplacement sans assistance électrique, la force motrice est fournie par le cycliste, elle est transmise aux roues 950 par l'intermédiaire de deux pédales tournant autour d'un axe de pédalier qui entraîne la roue arrière par une chaîne. Le chemin de couple lors de l'utilisation avec et sans assistance électrique est détaillé plus loin en référence à la figure 3.

Comme le montre la Figure 1, l'engin 900 comporte une unité de pilotage 800 ainsi que plusieurs capteurs 80, situés en particulier au niveau du pédalier, sur le cadre du vélo ou au niveau d'une roue. L'unité de pilotage 800 est notamment agencée pour piloter le moteur électrique 400 et le dispositif de changement de vitesse 100.

L'engin 900 ici représenté comporte également un dispositif de stockage d'énergie sous forme d'une batterie 910, un système d'éclairage 920, un pédalier 940 d'axe Xp, un système de localisation et/ou navigation 980 ainsi qu'un système interface homme-machine 990 comportant notamment un écran tactile apte à afficher des informations pour et/ou prendre en compte les demandes dudit utilisateur. Le système interface homme-machine 990 est en particulier relié au système de localisation 980 et sert d'interface de navigation. L'invention n'est pas limitée à un système interface homme-machine particulier, et peut comporter tout système connu de l'homme du métier.

Les roues 950 sont munies d'un système de freinage 960, comportant notamment des freins à disque 965.

L'engin 900 comporte un ensemble de transmission 700 illustré Figure 2. L'ensemble de transmission 700 comporte un dispositif de changement de vitesse 100 et un moteur électrique 400 d'axe de rotation Xm pourr fournir une partie de la puissance pour la propulsion de l'engin.

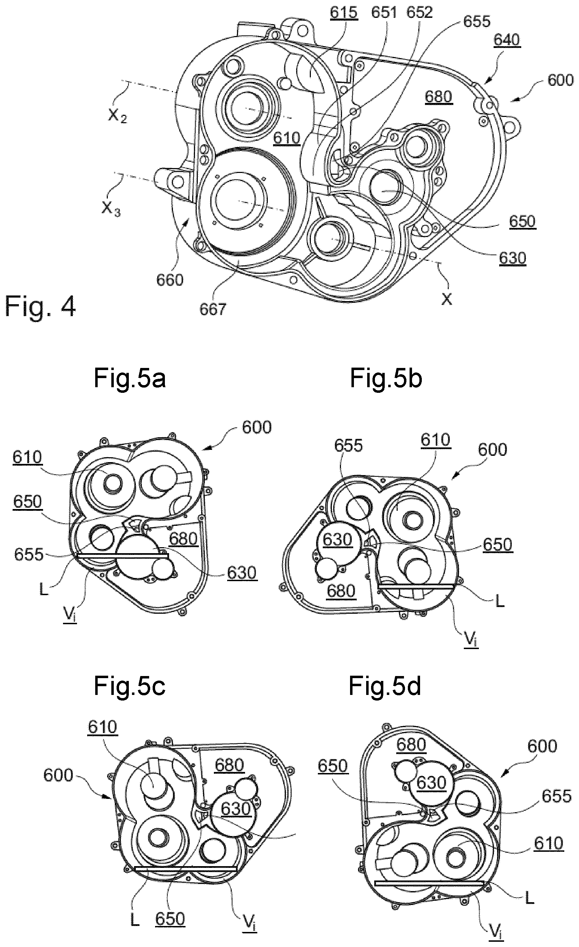

Comme le montre les Figures 1 et 2, le dispositif de changement de vitesse 100 est logé dans un boîtier 600 illustré plus en détail Figure 4. Le boitier 600 est ici positionné au niveau du pédalier 940 dont l'axe est confondu avec l'axe de sortie X₃ du dispositif de changement de vitesse 100.

Le dispositif de changement de vitesse 100 présente une pluralité de k rapports entre un premier rapport dit rapport n°1 et un rapport supérieur dit rapport n°k.

Comme le montre la Figure 3, le dispositif de changement de vitesse 100 tel qu'illustré comporte
- une série de pinions d'entrée 20 agencés pour tourner librement autour d'un arbre de sélection 200,
- une série de pinions de sortie 30 , solidaires en rotation d'un arbre creux 230, ledit arbre creux étant agencé pour entourer un axe de pédalier 200p de l'engin de mobilité 900,
- un actionneur de changement de vitesse agencé pour engager un rapport sélectionné.

L'actionneur de changement de vitesse comporte des moyens mécaniques d'engagement d'un rapport formés par une navette 155 mobile en translation dans l'arbre de sélection 200 qui est creux et des moyens électriques d'engagement d'un rapport, notamment un motoréducteur pour déplacer la navette 155 entre une position P₀ correspondant au rapport neutre et des positions P₁ à P₇ correspondant aux rapport de vitesse n°1 à n°7.

La figure 3 illustre en traits pleins le chemin de couple Cwu pour le couple fourni par l'utilisateurs, en particulier sans assistance électrique. L'entrée de couple se fait par un arbre 200p du pédalier 940, le couple passe par un premier pignon de multiplication primaire 11 qui engrène un deuxième pignon de multiplication primaire 12. Le premier pignon de multiplication primaire 11 est solidaire en rotation de l'arbre 200p du pédalier et le deuxième pignon de multiplication primaire 12 est solidaire en rotation d'un arbre primaire 200. Il existe un rapport de réduction permanent entre l'arbre 200p du pédalier et l'arbre primaire 200

L'arbre primaire 200 supporte une série de pignons d'entrée 20 agencés pour engrener avec une série de pignons de sortie 30. Le nombre de pignons d'entrée 20 et de pignons de sortie 30 correspond au nombre de rapports du dispositif de changement de vitesse, ici égale à 7. Dans l'exemple les pignons d'entrée 20 sont référencés Fri de Fr1 à Fr7 et les pignons de sortie 30 Fi de F1 à F7 selon le rapport i sélectionné. Les pignons d'entrée 20 sont libres et les pignons de sortie 30 sont fixes par rapport à un arbre de sortie 230. Tous les pignons de sortie 30 sont ainsi liés au pignon de chaîne 955 par l'arbre de sortie 230.

Dans le cadre de la présente demande, par les termes « libre », respectivement « fixe », on entend « libre en rotation par rapport à son axe», respectivement « fixe en rotation par rapport à son axe».

Le premier pignon de multiplication primaire 11, le deuxième pignon de multiplication primaire 12, les pignons d'entrée de Fr1 à Fr7 forment ici avec les pignons de sortie de F1 à F7 les engrenages du dispositif changement de vitesse 100.

Le couple traverse le pignon libre Fri qui engrène avec le pignon de sortie Fi correspondant au rapport i sélectionné. Le rapport n° 1 est sélectionné dans l'exemple de la figure 3 : le pignon libre Fr₁ qui engrène avec le pignon de sortie F1. Le rapport n° 1 correspond ici à un ratio de 1, sans que cette valeur soit limitative de l'invention.

Enfin, le couple est transmis à la roue 950 par la couronne 955 reliée par une chaine ou une courroie.

De façon similaire, le chemin de couple Cwa de l'assistance électrique est représenté en traits pointillés. Le couple en provenance de l'utilisateur est le même que précédemment. Cependant, il est cette fois associé à celui en provenance du moteur électrique 400.

Dans l'exemple illustré le moteur électrique 400 est relié au pignon de sortie F1 correspondant à un rapport n°1 du dispositif de changement de vitesse 100.

Le moteur électrique 400 est relié au pignon de sortie F1 via une pluralité de pignons 40 d'un réducteur 400. La pluralité de pignons 40 est formée dans l'exemple décrit de cinq pignons :
- un premier pignon 41 co-axial au moteur électrique 400,
- un deuxième pignon 42 engrenant avec le premier pignon, le deuxième pignon 42 étant un pignon d'entrée du réducteur 300 ,
- un troisième pignon 43 , pignon de sortie du réducteur 400, solidaire en rotation du deuxième pignon 42, le troisième pignon 43 engrenant avec
- un quatrième pignon 44, et
un cinquième pignon 45 engrenant avec ledit troisième pignon 43, le cinquième pignon 45 étant solidaire en rotation du quatrième pignon.

L'actionneur de changement de vitesse 150 comporte des moyens mécaniques d'engagement d'un rapport formés par une navette 155 mobile en translation dans l'arbre de sélection 200 qui est creux et des moyens électriques d'engagement d'un rapport, notamment un motoréducteur pour déplacer la navette 155 entre des position Pₓ correspondant aux différents rapports de vitesse.

Dans la variante de l'invention illustrée Figure 3a, l'ensemble de transmission 700 comporte une roue libre 430 d'axe Y , ladite roue libre étant liée au moteur électrique 400. L'axe Y est ici distinct de l'axe Xm du moteur électrique. La roue libre liée au moteur électrique est ici située dans le quatrième pignon 44 d'axe X, qui est confondu avec l'axe Y. Grâce à la roue libre, lorsque l'utilisateur entraine l'engin 900 au-delà de la vitesse seuil pour laquelle le moteur électrique 400 ne fournit plus de puissance, le premier pignon de multiplication primaire 11 et le deuxième pignon de multiplication primaire 12 ne sont plus reliés au moteur électrique 400. L'utilisateur n'a pas ainsi à fournir de puissance supplémentaire pour combattre l'inertie du réducteur 300 et du moteur électrique 400.

Selon l'invention, le rapport neutre ou rapport 0 du dispositif de changement de vitesse 100 peut être enclenché. Cette configuration est illustrée à la Figure 3b. La navette 155 est dans une position P₀ correspondant au rapport neutre. Aucun pignon libre Fri n'engrène un pignon de sortie et le mouvement du pédalier 940 ne permet pas d'entrainer la roue 950.

La Figure 4 illustre plus en détail le boîtier 600 de l'engin de mobilité 900 de la figure 1.

Le boitier 600 comporte un carter 660 délimitant un premier logement 610 et plusieurs deuxièmes logements, distincts les uns des autres. Le premier logement 610 est agencé pour loger les engrenages du dispositif changement de vitesse 100. Les deuxième logements 640, 630, 615, et 680 sont agencés pour loger respectivement le moteur électrique 400, respectivement le réducteur 300, l'actionneur de changement de vitesse 150 et l'unité de pilotage 800 de l'engin de mobilité. Les deuxièmes logements sont de préférence étanches, en particulier celui agencé pour contenir l'unité de pilotage 800.

Le carter 660 logeant le dispositif changement de vitesse 100 est fermé par deux flasques latéraux667. Le boitier 600 est illustré vide et avec seulement un flasque 667 sur les Figures 4 et 5a à 5d afin de rendre mieux visibles les différents premier et deuxièmes logements. Le premier logement 610 présente deux trous en regard dans les flasques latéraux 667 pour accueillir l'axe de pédalier de l'engin de mobilité 900.

Les Figures 5a et 5d représentent une orientation de boitier 600 correspondant à un vélo, comme l'engin de mobilité 900 de la Figure 1, suspendu par la roue 950 avant, respectivement par la roue 950 arrière. L'orientation du boitier 600 sur la figure 5c correspond à un roulage sur une route sans dénivelé. L'orientation du boitier 600 sur la figure 5b correspond à un vélo posé par terre sur sa pédale, les roues étant ici surélevées par rapport au pédalier 940. Le niveau L correspond à la surface du volume *Vi* qui est rempli par l'huile de lubrification des engrenages du dispositif de changement de vitesse 100 selon différentes positions de l'engin de mobilité, correspondant à différentes orientations du boitier 600. L'huile par gravité se trouve alors dans le volume *Vi* dans une partie basse du premier logement 610. Le volume d'huile *Vi est* notamment compris entre 50ml et 60ml.

Comme illustré pour ces orientations du boitier, et pour tout autre orientation du boitier600, le volume *Vi* est situé en dessous de l'évent 655. Le volume Vi, est également situé en dessous du passage supérieur 651 et du passage inférieur 652, évitant ainsi un écoulement d'huile entre le premier logement 610 et la cavité 650.

Les modes de réalisation décrits ci-dessus concernent un vélo à assistance électrique, l'invention n'est pas limitée à un type d'engin de mobilité.

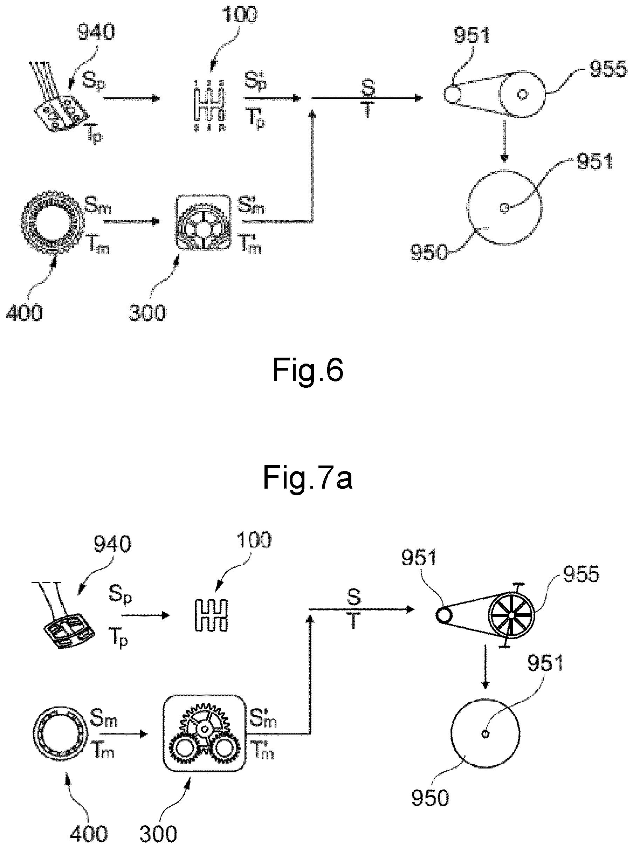

La Figure 6 illustre de façon schématique un procédé P de pilotage.

Lors de la conduite de l'engin de mobilité 900 en mode roulage le conducteur pédale à une vitesse de pédalage Sp correspondant à un couple d'entrée Tp du dispositif de changement de vitesse 100. En fonction du rapport Gi engagé présentant un ratio ri, la vitesse en sortie S'p du dispositif de changement de vitesse 100 est égale à la vitesse de pédalage divisée par le ratio ri : S'p = Sp/rᵢ,

Le moteur électrique 400 tourne à une vitesse Sm. Il est associé à un réducteur 300 présentant un rapport Ra, ou ratio Ra. La vitesse en sortie du réducteur S'm = Sm / Ra,
le couple fournit est égal au couple moteur multiplié par le rapport du réducteur 300 : T'm = Tm x Ra.

La Figure 7a illustre de façon schématique un procédé P de pilotage lors de la mise en oeuvre de la marche arrière. Le dispositif de changement de vitesse 100 est dans le rapport neutre. Le pédalier n'est pas relié au moteur électrique 400 ni à la sortie du dispositif de changement de vitesse 100. L'utilisateur ne fournit pas de couple utile même s'il pédale à une vitesse de pédalage Sp correspondant à un couple d'entrée Tp du dispositif de changement de vitesse 100.

Le couple utile provient alors uniquement du moteur électrique 400. Même si l'utilisateur U pédale, le couple produit par le mouvement du pédalier 940 ne sera pas transmis à la roue. Le moteur électrique 400 tourne en sens inverse entrainant la roue en marche arrière. La vitesse et le couple sont ici négatifs.

Le moteur électrique 400 tourne à une vitesse Sm. Il est associé à un réducteur 300 présentant un rapport Ra. La vitesse en sortie du réducteur S'm = Sm / Ra,
le couple fournit est égal au couple moteur multiplié par le rapport du réducteur 300 : T'm = Tm x Ra.

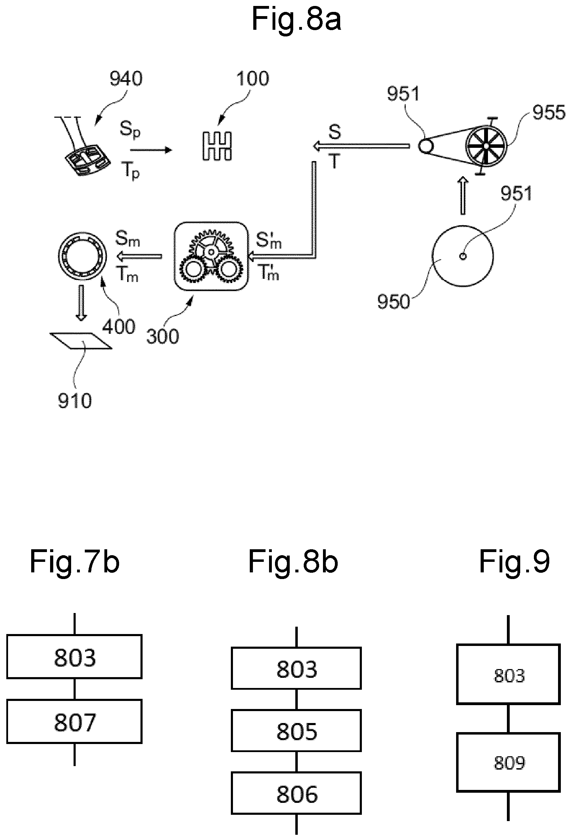

La Figure 7b illustre en schémas blocs les étapes du procédé suite à une consigne de l'utilisateur de marche arrière. L'unité de pilotage 800 commande préalablement le passage en rapport neutre du dispositif de changement de vitesse 100 dans une étape 803. L'unité de pilotage commande l'actionneur 150 du dispositif de changement de vitesse pour qu'aucun pignon libre 20 du dispositif de changement de vitesse ne soit enclenché.

Une fois le dispositif de changement de vitesse 100 est en rapport neutre, l'unité de pilotage 800 commande le moteur électrique 400 dans une étape 807 pour propulser l'engin de mobilité 900 en marche arrière. Le couple utile provient alors uniquement du moteur électrique 400. Même si l'utilisateur U pédale, le couple produit par le mouvement du pédalier 940 ne sera pas transmis à la roue. Le moteur électrique 400 tourne en sens inverse entrainant la roue en marche arrière. Dans un mode de réalisation, l'ensemble de transmission comporte un potentiomètre relié au capteur de commande de la marche arrière. L'utilisateur U peut ainsi choisir la vitesse du moteur électrique 400 de façon continue jusqu'à une valeur maximum de vitesse en marche arrière. Dans une variante, selon la consigne de l'utilisateur U la vitesse du moteur en marche arrière peut prendre une ou plusieurs valeurs discrètes.

La Figure 7a correspond à la Figure 6 lors de la mise en œuvre de la marche arrière. Le dispositif de changement de vitesse 100 en position neutre n'est pas relié au moteur électrique 400 et l'utilisateur ne fournit pas de couple utile.

La Figure 8a illustre de façon schématique un procédé P de pilotage lors de la mise en œuvre d'un freinage régénératif. Le dispositif de changement de vitesse 100 est dans le rapport neutre. Le schéma du chemin de couple est inversé lors de l'étape de freinage moteur. Le mouvement de la roue 950 fait tourner le moteur électrique 400 qui fonctionne comme générateur et peut charger la batterie 910 jusqu'à charge complète. La vitesse et le couple sont ici de sens opposés. Le freinage régénératif peut en particulier être mis en œuvre en marche avant, c'est-à-dire avec une vitesse positive et un couple moteur négatif, ou en marche arrière c'est-à-dire avec une vitesse négative et un couple moteur positif.

La Figure 8b illustre les étapes du procédé suite à une consigne freinage de l'utilisateur U. L'unité de pilotage 800 commande préalablement le passage en rapport neutre du dispositif de changement de vitesse 100 dans une étape 803. L'unité de pilotage commande l'actionneur 150 du dispositif de changement de vitesse pour qu'aucun pignon libre 20 du dispositif de changement de vitesse ne soit enclenché. Une fois le dispositif de changement de vitesse 100 est en rapport neutre, l'unité de pilotage 800 commande le moteur électrique 400 dans une étape 805 de freinage moteur.

Comme illustré à la Figure 8a, le dispositif de changement de vitesse 100 en position neutre n'est pas relié au moteur électrique 400 et le schéma du chemin de couple est inversé lors de l'étape 805 de freinage moteur. Le mouvement de la roue 950 fait tourner le moteur électrique 400 qui fonctionne comme générateur et peut charger la batterie 910 jusqu'à charge complète. Si la batterie 910 est totalement chargée ou lors d'une consigne prolongée de freinage, l'étape 805 de freinage moteur est suivie d'une étape 806 de freinage mécanique dans laquelle l'unité de pilotage commande le système de freinage 960.

La Figure 9 illustre les étapes du procédé suite à une consigne de verrouillage pour activer la fonction antivol de l'engin de mobilité. L'unité de pilotage 800 commande préalablement le passage en rapport neutre du dispositif de changement de vitesse 100 dans une étape 803. L'unité de pilotage commande l'actionneur 150 du dispositif de changement de vitesse pour qu'aucun pignon libre 20 du dispositif de changement de vitesse ne soit enclenché.

Une fois le dispositif de changement de vitesse 100 est en rapport neutre, l'unité de pilotage 800 une étape 809 de blocage d'au moins une des roues de l'engin.

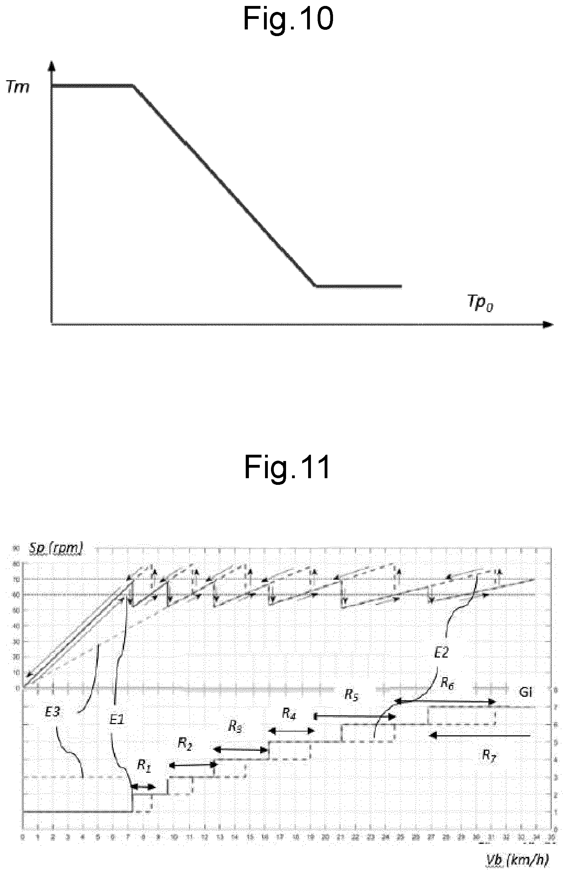

Le procédé ajuste en permanence le seuil d'effort à fournir par le cycliste *Tp₀* au niveau d'assistance disponible de façon instantanée *Tm* selon une loi illustrée Figure 10.

Si en fonction des paramètres de roulage remontés parles capteurs lors de l'utilisation de l'engin 900, le cycliste se trouve dans la zone en dessous de la courbe illustrée le seuil d'effort à fournir par le cycliste *Tp₀* est ajusté en temps réel au niveau d'assistance disponible *Tm* de façon à se placer sur la courbe.

Les courbes donnant la vitesse Sp du pédalier 940 en fonction du rapport engagé Gi illustrées sur la Figure 11 correspondent à trois mises en œuvre d'un procédé.

Ces exemples concernent en particulier l'engin 900 illustré précédemment dont le dispositif de changement de vitesse présente sept rapports. Pour chaque rapport Gi le procédé P définit, notamment de façon adaptative, un intervalle de vitesse de l'engin de mobilité Rᵢ de *R₁* à *R₇*

La courbe E1 en traits pleins correspond à un premier exemple de mise en œuvre avec une gamme de vitesse de pédalage Sp autour de 60rpm, par exemple entre 50 rpm et 70 rpm, avantageuse pour augmenter le rapport.

La courbe E2 en traits pointillés correspond à un deuxième exemple de mise en œuvre avec une gamme de vitesse de pédalage Sp autour de 70rpm, par exemple entre 60 rpm et 80 rpm, notamment privilégié pour diminuer le rapport.

La courbe E3 correspond à un troisième exemple de mise en œuvre avec une gamme de vitesse Sp autour de 60rpm et un départ directement en rapport 3.

Le changement de rapport se faisant toujours sur un intervalle, l'unité de pilotage analyse si, lorsqu'il est à rapport stabilisé, le cycliste se situe naturellement
- centré dans l'intervalle : auquel cas la loi de passage suivie par le cycliste est parfaitement adaptée
- décalée vers la borne supérieure de l'intervalle : auquel cas le procédé propose un intervalle de vitesse plus élevé
- décalée vers la borne inférieure de l'intervalle: auquel cas le procédé propose un intervalle de vitesse plus bas

Le procédé prend notamment en compte les conditions de roulage. Notamment, lors des montées dans la zone de roulage, la vitesse de pédalage est augmentée pour diminuer l'effort musculaire.

## Revendications

1. Ensemble de transmission (700) pour engin de mobilité (900),
ledit ensemble comportant un moteur électrique (400) et un dispositif de changement de vitesse (100) présentant une pluralité de k rapports entre un premier rapport dit rapport n°1 et un rapport supérieur dit rapport n°k, ledit dispositif de changement de vitesse (100) comportant:
- une série de pignons d'entrée (20) agencés pour tourner librement autour d'un arbre de sélection (200),
- une série de pignons de sortie (30), solidaires en rotation d'un arbre creux (230),
ledit arbre creux étant agencé pour entourer un axe de pédalier de l'engin de mobilité (900), le moteur électrique étant relié à au moins un desdits pignons de sortie (30), et
- un actionneur de changement de vitesse agencé pour engager un rapport sélectionné, **caractérisé en ce que** l'actionneur de changement de vitesse comporte des moyens mécaniques d'engagement d'un rapport formés par une navette (155) mobile en translation dans l'arbre de sélection (200) qui est creux et des moyens électriques d'engagement d'un rapport, notamment un motoréducteur, pour déplacer la navette (155) entre une position P₀ correspondant à un rapport neutre et des positions P₁ à Pₖ correspondant aux rapports de vitesse n°1 à n°k.

2. Ensemble selon la revendication 1, comportant un réducteur (300), le moteur électrique (400) étant relié audit pignon de sortie (30) du dispositif de changement de vitesse via le réducteur (300).

3. Ensemble selon l'une quelconque des revendications précédentes comportant au moins une roue libre, notamment une roue libre (430) liée au moteur électrique (400).

4. Ensemble selon la revendication précédente, l'axe (Y) de la roue libre étant distinct de l'axe du moteur (Xₘ).

5. Ensemble selon la revendication précédente et la revendication 2, la roue libre (430) étant située dans un quatrième pignon (44) du réducteur (300).

6. Ensemble selon l'une quelconque des revendications précédentes, le dispositif de changement de vitesse présentant entre 2 et 12 rapports, voire entre 5 et 9 rapports.

7. Ensemble selon l'une quelconque des revendications précédentes, le dispositif de changement de vitesse présentant le rapport neutre qui, lorsqu'il est enclenché ne permet pas à un mouvement du pédalier (940) de propulser l'engin de mobilité (900).

8. Ensemble selon l'une quelconque des revendications précédentes, où lorsque le rapport supérieur est enclenché, la vitesse de sortie du dispositif de changement de vitesse (100) est entre 3 et 6 fois supérieure, en particulier 4,5 fois supérieure à la vitesse d'entrée du dispositif de changement de vitesse (100).

9. Ensemble selon l'une quelconque des revendications précédentes, où le saut de rapport de réduction entre deux rapports consécutifs du dispositif de changement de vitesse est compris entre 10% et 50%, en particulier entre 15% et 40%, notamment entre 20% et 40%.

10. Engin de mobilité (900) comportant un ensemble de transmission selon l'une quelconque des revendications 1 à 9.

## Patentansprüche

1. Getriebeanordnung (700) für ein Mobilitätsfahrzeug (900), wobei die Anordnung einen Elektromotor (400) und eine Gangschaltvorrichtung (100) umfasst, die eine Vielzahl von k Gängen zwischen einem ersten Gang, genannt Gang Nr. 1, und einem höheren Gang, genannt Gang Nr. k, aufweist, wobei die Gangschaltvorrichtung (100) Folgendes umfasst: eine Reihe von 2 Eingangszahnrädern, die so angeordnet sind, dass sie sich frei um eine Schaltwelle (200) drehen, eine Reihe von Ausgangszahnrädern (30), die drehfest mit einer Hohlwelle (230) verbunden sind, wobei die Hohlwelle so angeordnet ist, dass sie eine Tretlagerachse des Mobilitätsfahrzeugs (900) umschließt, wobei der Elektromotor mit mindestens einem der Ausgangszahnräder verbunden ist, einen Gangschaltaktor, der so angeordnet ist, dass er einen ausgewählten Gang einlegt, **dadurch gekennzeichnet, dass** der Gangschaltaktor Mittel zum Einlegen eines Gangs umfasst, die durch ein in der hohlen Schaltwelle (200) translatorisch bewegbares Schaltshuttle (155) und elektrische Mittel zum Einlegen eines Gangs, insbesondere einen Getriebemotor zum Bewegen des Schaltshuttles (155) zwischen einer Position P₀, die dem Leerlauf entspricht, und Positionen P₁ bis Pk, die den Gängen Nr. 1 bis Nr. k entsprechen, gebildet werden.

2. Anordnung nach Anspruch 1, mit einem Untersetzungsgetriebe (300), wobei der Elektromotor (400) über das Untersetzungsgetriebe (300) mit dem genannten Ausgangsritzel (30) der Gangwechselvorrichtung verbunden ist.

3. Anordnung nach einem der vorhergehenden Ansprüche, mit mindestens einem Freilauf, insbesondere einem Freilauf (430), der mit dem Elektromotor (400) verbunden ist.

4. Anordnung nach dem vorhergehenden Anspruch, wobei die Achse (Y) des Freilaufs von der Motorachse (Xm) verschieden ist.

5. Anordnung nach dem vorhergehenden Anspruch und Anspruch 2, wobei der Freilauf (430) in einem vierten Ritzel (44) des Untersetzungsgetriebes (300) angeordnet ist.

6. Anordnung nach einem der vorhergehenden Ansprüche, wobei die Gangwechselvorrichtung zwischen 2 und 12 Gänge, oder sogar zwischen 5 und 9 Gänge aufweist.

7. Anordnung nach einem der vorhergehenden Ansprüche, wobei die Gangwechselvorrichtung den Leerlaufgang aufweist, der, wenn er eingelegt ist, es einer Bewegung des Tretlagers (940) nicht ermöglicht, das Mobilitätsfahrzeug (900) anzutreiben.

8. Anordnung nach einem der vorhergehenden Ansprüche, wobei bei eingelegtem höchsten Gang die Ausgangsgeschwindigkeit der Gangwechselvorrichtung (100) zwischen 3 und 6 Mal höher, insbesondere 4,5 Mal höher ist als die Eingangsgeschwindigkeit der Gangwechselvorrichtung (100).

9. Anordnung nach einem der vorhergehenden Ansprüche, wobei der Übersetzungssprung zwischen zwei aufeinanderfolgenden Gängen der Gangwechselvorrichtung zwischen 10% und 50%, insbesondere zwischen 15% und 40%, insbesondere zwischen 20% und 40% liegt.

10. Mobilitätsfahrzeug (900) mit einer Getriebeeinheit nach einem der Ansprüche 1 bis 9.

## Claims

1. Transmission assembly (700) for a mobility vehicle (900), said assembly comprising an electric motor (400) and a gear change device (100) having a plurality of k ratios between a first ratio referred to as ratio No. 1 and a higher ratio referred to as ratio No. k, said gear change device (100) comprising: a series of 2 input gears arranged to rotate freely around a selection shaft (200), a series of output gears (30), rotationally fixed to a hollow shaft (230), said hollow shaft being arranged to surround a bottom bracket axle of the mobility vehicle (900), the electric motor being connected to at least one of said output gears, a gear change actuator arranged to engage a selected ratio, **characterized in that** the gear change actuator comprises ratio engagement means formed by a shuttle (155) movable in translation within the selection shaft (200) which is hollow, and electrical ratio engagement means, notably a gear motor for moving the shuttle (155) between a position P₀ corresponding to the neutral ratio and positions P₁ to Pk corresponding to gear ratios No. 1 to No. k.

2. Assembly according to claim 1, comprising a reduction gear (300), the electric motor (400) being connected to said output pinion (30) of the speed change device via the reduction gear (300).

3. Assembly according to any one of the preceding claims comprising at least one freewheel, in particular a freewheel (430) connected to the electric motor
(400).

4. Assembly according to the preceding claim, the axis (Y) of the freewheel being distinct from the axis of the motor (Xm).

5. Assembly according to the preceding claim and claim 2, the freewheel (430) being located in a fourth pinion (44) of the reduction gear (300).

6. Assembly according to any one of the preceding claims, the speed change device having between 2 and 12 ratios, or even between 5 and 9 ratios.

7. Assembly according to any one of the preceding claims, the speed change device having the neutral ratio which, when
engaged, does not allow a movement of the crankset (940) to propel the mobility vehicle (900).

8. Assembly according to any one of the preceding claims, where when the higher ratio is engaged, the output speed of the speed change device (100) is between 3 and 6 times higher, in particular 4.5 times higher than the input speed of the speed change device (100).

9. Assembly according to any one of the preceding claims, where the
reduction ratio jump between two consecutive ratios of the speed change device is between 10% and 50%, in particular between 15% and 40%, notably between 20% and 40%.

10. Mobility vehicle (900) comprising a transmission assembly according to any one of claims 1 to 9.
